Europäisches Patentamt

European Patent Office

Office européen des brevets

(19)

(11) Veröffentlichungsnummer : **0 102 567**
**B1**

(12) **EUROPÄISCHE PATENTSCHRIFT**

(45) Veröffentlichungstag der Patentschrift :
05.03.86

(21) Anmeldenummer : 83108121.1

(22) Anmeldetag : 17.08.83

(51) Int. Cl.⁴ : **C 03 B   9/40, G 05 B 19/04**

(54) **Verfahren zur Steuerung einer Maschine zur Verarbeitung von Glas oder anderen thermoplastischen Massen.**

(30) Priorität : 03.09.82 DE 3232733

(43) Veröffentlichungstag der Anmeldung :
14.03.84 Patentblatt 84/11

(45) Bekanntmachung des Hinweises auf die Patenter-
teilung : 05.03.86 Patentblatt 86/10

(84) Benannte Vertragsstaaten :
**AT BE CH DE FR GB IT LI LU NL SE**

(56) Entgegenhaltungen :
EP-A- 0 001 649
EP-A- 0 037 915
DE-A- 1 704 112
US-A- 3 762 907
US-A- 4 007 028
US-A- 4 338 116

(73) Patentinhaber : **Fa. HERMANN HEYE**
**Allee**
**D-3063 Obernkirchen (DE)**

(72) Erfinder : **Geisel, Gerhard**
**Georgstrasse 13**
**D-3062 Bückeburg (DE)**

(74) Vertreter : **Kosel, Peter, Dipl.-Ing. et al**
**Patentanwälte Dipl.-Inge. Röse, Kosel & Sobisch**
**Odastrasse 4a Postfach 129**
**D-3353 Bad Gandersheim 1 (DE)**

**Beschreibung**

Die Erfindung betrifft ein Verfahren nach dem Oberbegriff des Anspruchs 1.

Bei einem bekannten Verfahren dieser Art (DE-Patentschrift 1 704 112) werden bei einer Glasformmaschine als Maschinenelemente mehrere Mündungsformhalter jeweils durch einen Elektromotor auf einer Kreisbahn bewegt. Jeder Elektromotor wird durch ein von außen kommendes Startsignal in Gang gesetzt und bewirkt anschließend nach einem bestimmten Programm die Fortbewegung des zugehörigen Mündungsformhalters um einen definierten Winkel. Am Ende dieses Drehprogramms positioniert der Mündungsformhalter und wird ein Stopsignal abgegeben, das anzeigt, daß das Drehprogramm abgelaufen ist und der Mündungsformhalter in der neuen Sollposition steht. Nachteilig ist dabei, daß Ungewißheit über den Fortgang des Drehprogramms herrscht. Die Steuerung weiß nicht, an welcher Position sich der Mündungsformhalter zu einem bestimmten Zeitpunkt befindet. Ferner ist die Zeitdauer der Drehbewegung des Mündungsformhalters in seine neue Sollposition nicht konstant. Mit den Mündungsformhaltern wirken aber nacheinander z. B. Maschinenelemente in der Vorformstation und Maschinenelemente in der Fertigformstation zusammen, die in ihren eigenen Bewegungen von der Bewegung der Mündungsformhalter abhängen. Wegen der fehlenden Reproduzierbarkeit der Bewegungen der Mündungsformhalter und der Steuerung jener übrigen Maschinenelemente nach einem festen Zeitraster kommt es zum einen zu Kollisionen von Maschinenelementen und zum anderen zu Verlustzeiten im Prozeß, weil man mit der Programmierung zeitlich auf der sicheren Seite bleibt.

Aus der US-PS-4 338 116 ist es an sich bekannt, eine konventionelle I.S.-Glasformmaschine elektronisch so zu steuern, daß mechanische Verlustzeiten bestimmter Maschinenelemente festgestellt und, falls gewünscht, verringert werden. Damit soll die Produktionsgeschwindigkeit gesteigert werden. Bei dieser Steuerung sind lediglich die Umschaltzeitpunkte für die konventionellen Druckluftventile innerhalb der Ventilblocks reproduzierbar. Ein entscheidender Nachteil ist, daß die Bewegungsabläufe der druckluftgetriebenen Maschinenelemente im Anschluß an eine Ventilumschaltung unbekannt bleiben und nicht reproduzierbar zu beeinflussen sind. Deshalb müssen zur Vermeidung von Kollisionen von Maschinenelementen miteinander sicherheitshalber Totzeiten oder mechanische Verlustzeiten eingeplant werden. Nachteilig ist ferner, daß ein im Rahmen der Möglichkeiten für eine Sektion der I.S.-Maschine optimierter Prozeßablauf sich nicht auf eine andere Sektion der I.S.-Maschine übertragen läßt.

Der Erfindung liegt die Aufgabe zugrunde, den Prozeß der Formung zu optimieren, und reproduzierbar zu gestalten, Verlustzeiten im Prozeß zu minimieren, Kollisionen von Maschinenelementen miteinander zu vermeiden und bei Störungen im Maschinenbetrieb eine selbsttätige Abschaltung der Maschine zu erreichen und die Störungsursache schnell zu ermitteln.

Diese Aufgabe ist erfindungsgemäß durch die Merkmale des Kennzeichnungsteils des Anspruchs 1 gelöst. Durch diese Maßnahmen steht der Gesamtbewegungsablauf jedes Maschinenelements unter vollständiger Kontrolle. Das abhängige Maschinenelement kann sich nur dann programmgemäß verhalten, wenn das führende Maschinenelement sich zuvor programmgemäß verhalten und das abhängige Maschinenelement gesteuert hat. Vorzugsweise werden sämtliche Maschinenelemente der Maschine in dieser Weise gesteuert. Ein zunächst führendes Maschinenelement kann nachfolgend zum abhängigen Maschinenelement werden und umgekehrt. Verlustzeiten im Prozeß können ohne Gefährdung der Maschine minimiert und im Grenzfall zu Null gemacht werden. Dadurch kann der gesamte Prozeß optimiert und Fertigungszeit gespart werden. Kollisionen von Maschinenelementen miteinander sind ausgeschlossen. Wenn nämlich aufgrund eines nicht programmgemäßen Verhaltens des führenden Maschinenelements ein abhängiges Maschinenelement nicht gesteuert wird, bleibt die Maschine stehen. Durch eine eventuelle Anzeige der Fehlerstelle, z. B. auf einem Sichtschirm, hat das Bedienungspersonal schnellste Information und Zugriff zu Reparaturzwecken. Eine Maschine im Sinne der Erfindung kann auch jede Sektion einer I.S.-Glasformmaschine sein.

Die Merkmale des Anspruchs 2 gestatten es, auch Verzögerungen von variabel programmierbarer Länge in der Steuerung des abhängigen Maschinenelements wirksam werden zu lassen.

Gemäß Anspruch 3 können an beliebiger Stelle in der Fertigungsprogrammdauer beliebige Prozeßdauern vorgesehen werden.

Die Merkmale des Anspruchs 4 bieten eine zusätzliche Kontrollmöglichkeit. So kann zu einer bestimmten Zeitmarke innerhalb der Fertigungsprogrammdauer oder bei einer bestimmten Position in einem Bewegungsablauf eines Maschinenelements eine Positions- oder Endlagenkontrolle bei einem anderen Maschinenelement durchgeführt und für die nachfolgende Steuerung berücksichtigt werden. Bei einem selbsttätigen Abschalten der Maschine kann auch in diesem Fall die Fehlerursache angezeigt und damit ein schneller Zugriff zu Reparaturzwecken erreicht werden. Dadurch können fehlerbedingte Stillstandszeiten in der Maschine minimal gehalten werden.

Alle Zeitintervalle oder Prozeßdauern, z. B. die Preßdauer, die den Prozeß technologisch beeinflussen, sind erfindungsgemäß variabel und lassen sich bei laufender Maschine verändern.

Gemäß Anspruch 5 kann als Plausibilitätskontrolle eine Rechnersteuerung vor dem Wirksamwerden der Veränderung untersuchen, ob die neue Größe mit dem bestehenden Fertigungsprogrammabstand möglich ist.

Die Ansprüche 6 und 7 kennzeichnen für die Realisierung günstige Antriebs- und Steuerungssysteme.

Die Bewegungsabläufe der Maschinenelemente können qualitativ im Speicher eines Steuerungsrechners festgelegt und für die jeweilige Bewegung abrufbar sein. Dabei kann die in dem Speicher enthaltene Information durch Änderung einer Zählerfrequenz quantitativ (absolut) beeinflußt werden. Die in dem Speicher enthaltene Information kann auch durch Multiplikation quantitativ (absolut) beeinflußt werden.

Die Merkmale des Anspruchs 8 dienen der engstmöglichen zeitlichen Folge der benötigten Bewegungen und Vorgänge innerhalb der Fertigungsprogrammdauer. Es wird ferner die schnellstmögliche Aufeinanderfolge der Fertigungsprogramme ermöglicht. Die Startsignale können z. B. aus einem Tropfenformzyklus eines Tropfenspeisers abgeleitet werden, der Glastropfen für eine Glasformmaschine liefert.

Die Merkmale des Anspruchs 9 bieten für die darin behandelte I.S.-Glasformmaschine eine praktische Anleitung zur Bestimmung des minimalen Fertigungsprogrammabstands.

Gemäß Anspruch 10 kann bei Bedarf eine Leistungsverstärkung über die Leistung des Elektromotors hinaus erfolgen.

Besonders geeignet sind dafür die hydraulischen Verstärker gemäß Anspruch 11 wegen ihrer hohen Ansprechgeschwindigkeit und großen Leistungsbreite. Derartige hydraulische Verstärker liefert z. B. die SIG Schweizerische Industrie-Gesellschaft, Produktbereich Hydraulik, CH-8212 Neuhausen am Rheinfall, Schweiz, unter den Typenbezeichnungen LV (hydraulischer Linearverstärker) und SFM (hydraulischer Drehmomentverstärker).

Die Erfindung wird nachfolgend anhand der in den Zeichnungen dargestellten Ausführungsbeispiele näher erläutert. Es zeigen :

Figur 1 ein schematisches Weg-Zeit-Diagramm für wichtige Maschinenelemente einer nach dem Preß-Blas-Verfahren arbeitenden I.S.-Glasformmaschine und

Figur 2 einen typischen Bewegungsablauf eines Maschinenelements in gegenüber Fig. 1 vergrößerter Darstellung.

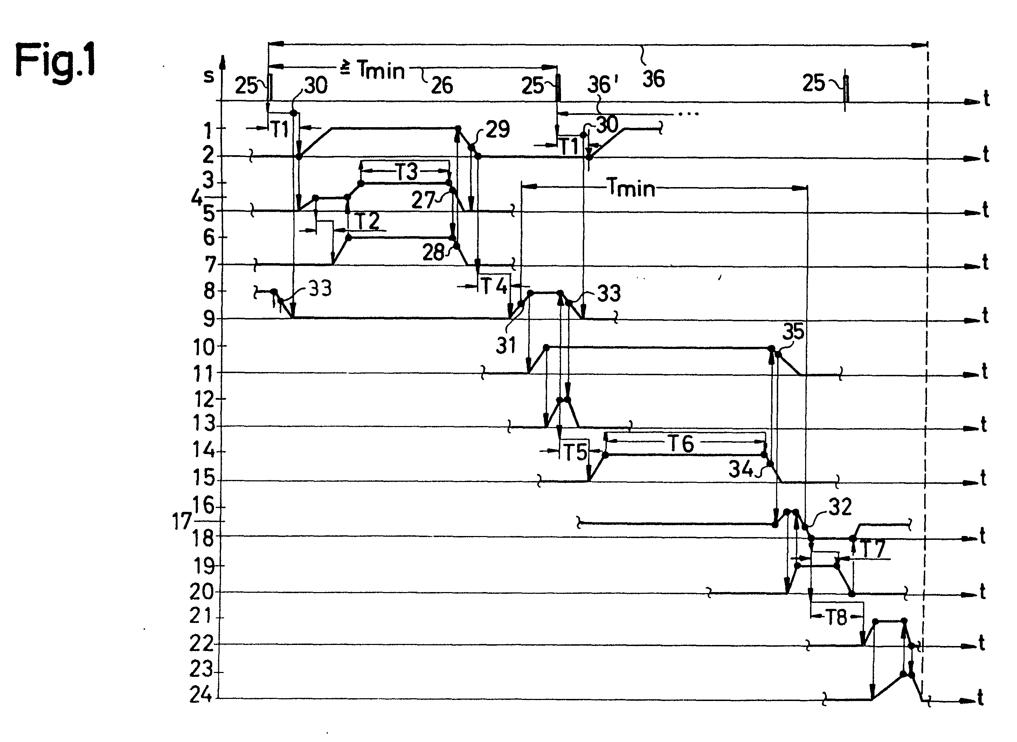

Das Weg-Zeit-Diagramm gemäß Fig. 1 kennzeichnet beispielhaft die Verhältnisse für eine nach dem Preß-Blas-Verfahren arbeitenden I.S.-Glasformmaschine, wie sie z. B. in dem Buch « Glasmaschinen, Aufbau und Betrieb der Maschinen zur Formgebung des heißen Glases » von W. Giegerich und W. Trier, Springer-Verlag, 1964, Seite 294 bis 298 und Seite 300 und 301 dargestellt und beschrieben ist.

In Fig. 1 kommt den Punkten auf der Ordinate folgende Bedeutung zu : 1 Vorform geschlossen, 2 Vorform geöffnet, 3 Preßstempel in Preßstellung, 4 Preßstempel in Ladestellung, 5 Preßstempel in Ausgangsstellung, 6 Vorformboden auf der Vorform, 7 Vorformboden in Ausgangsstellung, 8 Schwenkmechanismus auf der Fertigformseite, 9 Schwenkmechanismus auf der Vorformseite, 10 Fertigform geschlossen, 11 Fertigform geöffnet, 12 Mündungsform geöffnet, 13 Mündungsform geschlossen, 14 Blaskopf auf der Fertigform, 15 Blaskopf in Ausgangsstellung, 16 Entnahmemechanismus in Greifstellung, 17 Entnahmemechanismus in Ausgangsstellung, 18 Entnahmemechanismus in Abgabestellung, 19 Greifer des Entnahmemechanismus geschlossen, 20 Greifer des Entnahmemechanismus geöffnet, 21 Überschieber ausgefahren, 22 Überschieber in Ausgangsstellung, 23 Überschieber über das Transportband in Abgabeschwenkstellung geschwenkt und 24 Überschieber in Ausgangsschwenkstellung.

Überschieber der zu den Bezugszahlen 21 bis 24 erwähnten Art sind z. B. der DE-Patentschrift 27 46 675 zu entnehmen.

Ganz oben in Fig. 1 sind über der Zeit aufeinanderfolgende Startsignale 25 für eine bestimmte Sektion der I.S.-Glasformmaschine aufgezeichnet. Diese Startsignale 25 werden z. B. aus einem Tropfenformzyklus eines nicht im einzelnen gezeichneten Tropfenspeisers abgeleitet, der Glastropfen für die I.S.-Glasformmaschine liefert. Der zeitliche Abstand 26 zwischen zwei aufeinanderfolgenden Startsignalen 25 und damit zwischen zwei aufeinanderfolgenden Fertigungsprogrammen einer bestimmten Sektion stellt den tatsächlichen Fertigungsprogrammabstand dar, mit dem diese Sektion der I.S.-Glasformmaschine betrieben wird, und ist gleich oder größer als ein minimaler Fertigungsprogrammabstand T min.

Jedes Startsignal 25 startet gemäß Fig. 1 eine variable Verzögerungsdauer T1, deren Ende die Vorform aus ihrer geöffneten Stellung 2 in die geschlossene Stellung 1 startet, wie dies durch den nach unten weisenden Pfeil gekennzeichnet ist. Gleichzeitig wird der Preßstempel aus seiner Ausgangsstellung 5 in seine Ladestellung 4 gestartet. Mit der Verzögerungsdauer T1 kann der Start des Bewegungsablaufs der Tropfenfalldauer von dem Speiser in die Vorform angepaßt werden.

Sobald der Preßstempel seine Ladestellung 4 erreicht hat, wird eine Verzögerungsdauer T2 für die Vorformbodenbewegung gestartet. Während der Verzögerungsdauer T2 fällt der Glastropfen in die Vorform. Die Größe der Verzögerung T2 ist variabel und wird zu Beginn der Produktion bei laufender Maschine manuell optimiert. Am Ende der Verzögerungsdauer T2 wird die Bewegung des Vorformbodens aus seiner Ausgangsstellung 7 in seine Stellung 6 auf der Vorform gestartet. Sobald er die Stellung 6 erreicht hat, wird gemäß dem nach oben weisenden Pfeil die Bewegung des Preßstempels aus seiner Ladestellung 4 in seine Preßstellung 3 gestartet. In dieser Preßstellung 3 wird der Preßstempel für eine technologisch benötigte, variable Preßdauer T3 gehalten, nach deren Ablauf die Rückbewegung des Preßstempels aus seiner Preßstellung 3 in seine Ausgangsstellung 5 gestartet wird.

In einer vorprogrammierten Position 27 während der Rückbewegung des Preßstempels wird die Rückbewegung des Vorformbodens aus seiner Stellung 6 in seine Ausgangsstellung 7 gestartet. In einer vorprogrammierten Position 28 während dieser Rückbewegung wird die Rückbewegung der Vorform aus ihrer geschlossenen Stellung 1 in ihre geöffnete Stellung 2 gestartet. In einer vorprogrammierten Position 29 dieser Rückbewegung wird gemäß dem nach unten weisenden Pfeil eine Kontrolle durchgeführt, ob sich zu diesem Zeitpunkt der Preßstempel schon in seiner Ausgangsstellung 5 befindet. Ist dies nicht der Fall, wird die Maschine selbsttätig stillgesetzt und gleichzeitig, z. B. auf einem Sichtschirm, die Fehlerquelle dem Bedienungspersonal angezeigt, daß nämlich der Preßstempel seine Ausgangsstellung 5 nicht erreicht hat. Das Bedienungspersonal ist dadurch in der Lage, ohne Suchen der Fehlerquelle sogleich die Ursache dafür zu beheben, daß der Preßstempel seine Ausgangsstellung nicht erreichte. Umgehend danach kann die Maschine wieder in Betrieb genommen werden. Es entstehen auf diese Weise nur geringste Stillstandszeiten.

Ergibt die Kontrolle in der Position 29 dagegen, daß der Preßstempel seine Ausgangsstellung 5 erreicht hat, wird zu dem Zeitpunkt, an dem die Vorform ihre voll geöffnete Stellung 2 wieder erreicht hat, eine variable Rückerwärmungsdauer T4 in der Vorform gestartet. Die Größe der Rückerwärmungsdauer T4 richtet sich nach den technologischen Erfordernissen. Am Ende der Rückerwärmungsdauer T4 wird die Bewegung des Schwenkmechanismus von seiner Stellung 9 auf der Vorformseite in seine Stellung 8 auf der Fertigformseite gestartet.

Vor dem Ende der weiter vorne erwähnten Verzögerungsdauer T1 wird zu einer vorprogrammierten Zeitmarke 30 gemäß dem nach unten gerichteten Pfeil kontrolliert, ob sich zu diesem Zeitpunkt der Schwenkmechanismus in seiner Stellung 9 auf der Vorformseite befindet. Ist dies nicht der Fall, wird die Maschine selbsttätig stillgesetzt und die Fehlerquelle in der vorerwähnten Weise zur schnellstmöglichen Behebung des Fehlers angezeigt. Befindet sich dagegen der Schwenkmechanismus in seiner Stellung 9, läßt die Steuerung in der vorbeschriebenen Weise nach Ablauf der Verzögerungsdauer T1 die beschriebenen Vorgänge ablaufen.

Schon bis hierher ist ersichtlich, daß eine gegenseitige Zwangsführung der Maschinenelemente dergestalt stattfindet, daß die betreffenden Maschinenelemente im Wechsel führende oder abhängige Maschinenelemente relativ zueinander werden. Dadurch ist eine Verknüpfung möglich, die kürzestmögliche Fertigungsprogrammdauern bei ständiger Überwachung der mechanischen Funktionen der Maschinenelemente gestattet.

Während der Bewegung des Schwenkmechanismus aus seiner Stellung 9 in seine Stellung 8 wird in einer vorprogrammierten Position 31 der Beginn des minimalen Fertigungsprogrammabstands T min definiert, dessen Ende durch eine ebenfalls vorprogrammierte Position 32 während der Rückbewegung des Entnahmemechanismus aus seiner Greifstellung 16 in seine Abgabestellung 18 definiert ist. Dieser minimale Fertigungsprogrammabstand T min darf durch den tatsächlichen Fertigungsprogrammabstand 26 nicht unterschritten werden. Geschieht dies dennoch, ist die Durchführung des Prozesses nicht mehr möglich. Für den jeweiligen Prozeß kann der minimale Fertigungsprogrammabstand T min von der Rechnersteuerung ermittelt und zur Überwachung und als Sollgröße für die Regelung des zeitlichen Abstands 26 zwischen aufeinanderfolgenden Startsignalen 25, also des tatsächlichen Fertigungsprogrammabstands, herangezogen werden.

Sobald der Schwenkmechanismus in seiner Stellung 8 auf der Fertigformseite angelangt ist, wird die Bewegung der Fertigform von ihrer geöffneten Stellung 11 in ihre geschlossene Stellung 10 gestartet. Sobald die Fertigform geschlossen ist, wird die Bewegung der Mündungsform von ihrer geschlossenen Stellung 13 in ihre geöffnete Stellung 12 gestartet. Sobald die Mündungsform geöffnet ist, wird einerseits die Rückbewegung des Schwenkmechanismus in seine Stellung 9 auf der Vorformseite und andererseits eine variable Rückerwärmungsdauer T5 in der Fertigform gestartet.

In einer vorprogrammierten Position 33 auf dem Rückweg des Schwenkmechanismus wird die Rückbewegung der Mündungsform in ihre geschlossene Stellung 13 gestartet.

Der Ablauf der Rückerwärmungsdauer T5 startet die Bewegung des Blaskopfes aus seiner Ausgangsstellung 15 in seine Betriebsstellung 14 auf der Fertigform. Bei Ankunft in dieser Betriebsstellung wird eine variable Blasdauer T6 gestartet, die normalerweise größer als 16 ist. Das Ende der Blasdauer T6 startet die Rückbewegung des Blaskopfes in seine Ausgangsstellung 15.

In einer vorprogrammierten Position 34 während dieser Rückbewegung wird gemäß dem nach oben gerichteten Pfeil die Rückbewegung der Fertigform in ihre geöffnete Stellung 11 gestartet. Bei einer vorprogrammierten Position 35 während dieser Rückbewegung wird gemäß dem nach unten gerichteten Pfeil die Bewegung des Entnahmemechanismus aus seiner Ausgangsstellung 17 in seine Greifstellung 16 gestartet. Sobald diese Greifstellung 16 erreicht ist, wird gemäß dem nach unten gerichteten Pfeil die Bewegung des Greifers des Entnahmemechanismus aus seiner geöffneten Stellung 20 in seine geschlossene Stellung 19 gestartet. Sobald diese erreicht ist, wird der Greifer zum führenden Maschinenelement und startet gemäß dem nach oben gerichteten Pfeil die Bewegung des Entnahmemechanismus aus seiner Greifstellung 16 in seine Abgabestellung 18. Wie erwähnt, ist in dieser Rückbewegung die Position 32 vorprogrammiert, die zur Definition des minimalen Fertigungsprogrammabstands T min dient.

Sobald der Entnahmemechanismus in seiner Abgabestellung 18 steht, wird einerseits eine variable Verzögerungsdauer T7, um Pendelbewegungen im Greifer abklingen zu lassen, und andererseits eine variable Verweildauer T8 über und danach auf der Absetzplatte gestartet, die insbesondere der Bodenkühlung des fertigen Glasbehälters dient.

Mit dem Ablauf der Verzögerungsdauer T7 wird die Rückbewegung des Greifers des Entnahmemechanismus in seine geöffnete Ausgangsstellung gestartet. Sobald diese erreicht ist, wird von dort aus gemäß dem nach oben gerichteten Pfeil die Rückbewegung des Entnahmemechanismus aus seiner Abgabestellung 18 in seine Ausgangsstellung 17 gestartet.

Das Ende der Verweildauer T8 startet die lineare Zustellbewegung des Überschiebers aus seiner Ausgangsstellung 22 in seine ausgefahrene Betriebsstellung 21, bei deren Erreichen die Schwenkbewegung des Überschiebers aus seiner Ausgangsschwenkstellung 24 in seine Abgabeschwenkstellung 23 über dem Transportband gestartet wird. Sobald diese letztere erreicht ist, wird die lineare Rückstellbewegung des Überschiebers in seine Ausgangsstellung 22 gestartet. Ist die Ausgangsstellung 22 erreicht, wird die Schwenkbewegung des Überschiebers in die Ausgangsschwenkstellung 24 gestartet.

Die Rückkehr des Überschiebers in seine Ausgangsschwenkstellung 24 kennzeichnet gemäß oder in Fig. 1 gestrichelt eingetragenen senkrechten Linie das Ende einer Fertigungsprogrammdauer 36, deren Anfang durch den Beginn des zugehörigen Startsignals 25 bestimmt ist.

In Fig. 1 ist oben in der Mitte angedeutet, wie noch innerhalb der in Fig. 1 voll durchgezeichneten Fertigungsprogrammdauer 36 das nächste Startsignal 25 für die betreffende Sektion der I.S.-Glasformmaschine eine nachfolgende Fertigungsprogrammdauer 36' mit identischem Programmablauf gestartet wird, die in kürzestem Fertigungsprogrammabstand 26 die inzwischen frei gewordenen Maschinenelemente nutzt.

Die vorprogrammierte Position 29 und die vorprogrammierte Zeitmarke 30 sind in dem Diagramm gemäß Fig. 1 nur als Beispiele für die Kontrolle einer Endlage von Maschinenelementen eingezeichnet worden. Es versteht sich, daß bei Bedarf insbesondere an kritischen Stellen im Zusammenwirken von Maschinenelementen noch weitere derartige Endlagen- und Zwischenstellungskontrollen vorgesehen werden können.

Das in Fig. 1 dargestellte Diagramm zeigt die grundsätzlichen Zusammenhänge und Abhängigkeiten. So könnte z. B. der Preßstempelmechanismus aus seiner Ladestellung 4 nicht erst dann in seine Preßstellung 3 gestartet werden, wenn sich der Vorformboden in seiner Stellung 6 auf der Vorform befindet, sondern schon aus einer bestimmten Position des Vorformbodens auf dem Wege von seiner Ausgangsstellung 7 in seine Stellung 6 auf der Vorform.

Außerdem wird darauf hingewiesen, daß es sich bei dem Diagramm gemäß Fig. 1 um ein schematisches Diagramm handelt, das in den relativen Zeitabschnitten nicht maßstäblich ist. Ferner sind in diesem Diagramm besondere Prozeßdauern wie Kühldauer, Aufschaltung von Vakuum auf Formen, Schmieren von Formen, zur Aufrechterhaltung einer deutlichen Zeichendarstellung nicht eingetragen worden.

Zur Vereinfachung der zeichnerischen Darstellung sind in Fig. 1 sämtliche Flanken der Bewegungen der Maschinenelemente als Geraden gezeichnet worden.

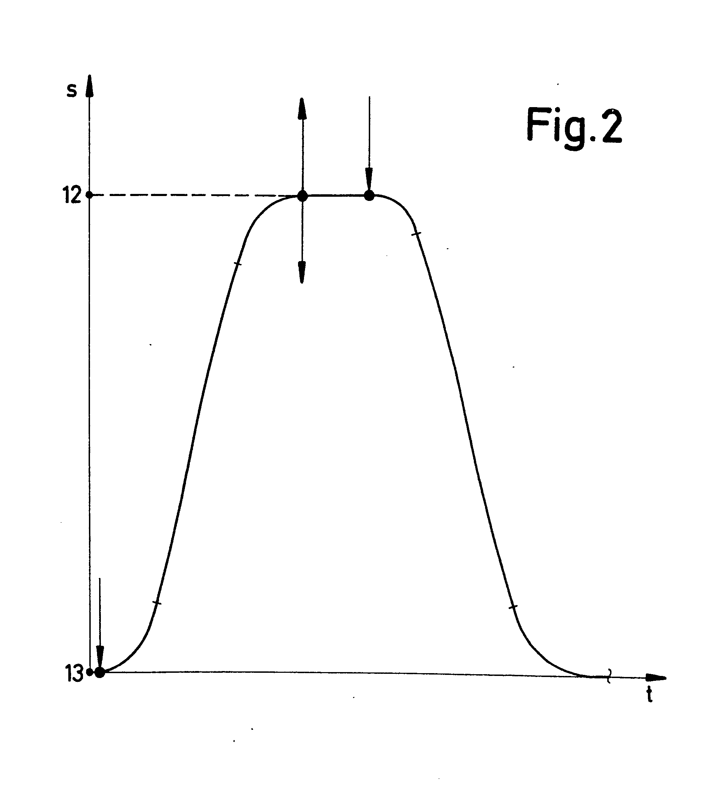

Fig. 2 zeigt am Beispiel der Bewegungen der Mündungsform zwischen ihrer geöffneten Endstellung 12 und ihrer geschlossenen Endstellung 13, wie ein solcher Bewegungsablauf tatsächlich gestaltet werden kann. Insbesondere sind dabei Beschleunigungs- und Verzögerungsbereiche markiert. All diese Geschwindigkeitsverläufe sind fest vorprogrammiert. Eine Endlagendämpfung, wie z. B. bei pneumatisch betriebenen Zylindern, ist hier nicht mehr erforderlich.

Ein wesentlicher Nachteil der bekannten Antriebe der Maschinenelemente ist der, daß die üblichen Elektronik-, Rechner- oder Trommelsteuerungen lediglich Bewegungen starten, die Bewegungsabläufe selbst aber nicht unter Kontrolle stehen. Die bekannten Steuerungssysteme « Wissen » nicht einmal, ob die Bewegung, die gestartet wurde, überhaupt stattgefunden hat.

Aufgrund des sehr unterschiedlichen Zustands identischer pneumatischer oder hydraulischer Elementantriebe ist lediglich mit einem Starten und dann freien Laufenlassen ein gleicher Bewegungsablauf nicht erreichbar. Die bekannnen Elementantriebe ändern sogar ihr Eigenbewegungsverhalten innerhalb relativ kurzer Zeit.

Dieser Tatsache wird bei der bekannten Einstellung der Maschine dadurch begegnet, daß bei voneinander abhängigen Elementbewegungen eine Sicherheitszeitspanne — gefühlsmäßig oder nach Augenschein — berücksichtigt wird. Solche Zeitspannen sind naturgemäß Verlustzeiten. Die Folge ist eine niedrigere Produktionsgeschwindigkeit.

Nach dem neuen Steuerungsverfahren werden dagegen die Bewegungsabläufe der Maschinenelemente uneingeschränkt reproduzierbar. Die Folge sind höhere Produktionsgeschwindigkeiten, reproduzierbare Produktion, höhere Ausbeute, geringerer Verschleiß an der Maschine und an den Formen, geringere Schallemission wegen präziser Bewegungen der Maschinenelemente und Vermeidung pneumatischer Antriebe mit ihren Leck- und Auspuffgeräuschen.

Variable Größen, die vom Maschinenführer bisher beeinflußbar sind, werden erheblich reduziert. Es gibt z. B. beim Betrieb einer I. S.-Glasformmaschine nach dem neuen Verfahren nur noch variable Prozeßdauern, wie z. B. Verzögerungsdauer, Preßdauer, Rückerwärmungsdauer, Blasdauer, Kühldauer, Vakuumdauer. Der mechanische Ablauf einer nach dem neuen Verfahren gesteuerten Maschine ist fest und optimal vorgegeben und braucht auch nicht bei Sortenwechsel verändert zu werden. Zusätzlich können bei Bedarf Geschwindigkeitsverläufe, z. B. für den Preßvorgang und die Bewegung des Schwenkmechanismus, variabel gestaltet werden.

Mit den für den Antrieb der Maschinenelemente jetzt verwendeten Elektromotoren, z. B. Gleichstrom- oder Schrittmotoren mit Absolutsonder- oder Absolutendstellungsrückführung, lassen sich in Verbindung mit einer entsprechenden Steuerung alle Bewegungen der Maschinenelemente nach Position und Winkelgeschwindigkeit jederzeit unter Kontrolle halten. Der Geschwindigkeitsverlauf kann in jedem Fall fest vorprogrammiert werden. Wird ein Schrittmotor verwendet, gehört zu jeder Bewegung eine bestimmte Anzahl von Schritten, die von der Steuerung erzeugt werden. Aus der zeitlichen Folge dieser Schritte ergibt sich die Winkelgeschwindigkeit oder Stellgeschwindigkeit, aus der Anzahl der ausgegebenen Schritte die Position des angetriebenen Maschinenelements. So ist jeder Bewegungsablauf vorher bestimmbar und beherrschbar. Eine subjektive Beurteilung und Optimierung des Maschinenbetriebs entfallen. Aufgrund der praktisch ohne Verzögerung arbeitenden Maschinenelemente ist der Prozeß nicht nur von Sektion zu Sektion einer Mehrsektionenmaschine, sondern auch von einer Maschine auf andere Maschinen übertragbar.

Die Produktionsgeschwindigkeit einer so gesteuerten Maschine ist jetzt nur noch von den variabel programmierbaren Prozeßdauern abhängig. Die für die Mechanikbewegungen erforderliche Dauer ist jeweils optimal gering und unveränderlich. Auf diese Weise ist ein Fertigungsprozeß in seiner Gesamtdauer (Fertigungsprogrammdauer 36) vorher bestimmbar und reproduzierbar. Die dazu optimal passende Frequenz der Startsignale 25, z. B. die Schnittgeschwindigkeit des Tropfenspeisers, kann von der Maschinensteuerung selbsttätig bestimmt werden.

**Patentansprüche**

1. Verfahren zur Steuerung einer Maschine zur Verarbeitung schmelzflüssigen Glases oder anderer thermoplastischer Massen, die mehrere innerhalb einer Fertigungsprogrammdauer (36) zu bewegende Maschinenelemente aufweist, wobei wenigstens zwei maschinenelemente durch einen Elektromotor angetrieben werden, wobei jede Fertigungsprogrammdauer (36') durch ein externes Startsignal (25) gestartet wird, und wobei durch das Startsignal (25) der Start wenigstens eines der wenigstens zwei Maschinenelemente aus einer Ausgangsstellung heraus veranlaßt wird, dadurch gekennzeichnet, daß die Bewegungsabläufe und gegebenenfalls Stillstandsdauern (Prozeßdauern T3, T6) der wenigstens zwei Maschinenelemente im absoluten Zeitraster im Speicherbereich einer elektronischen Steuerung variabel programmiert werden, daß der Bewegungsablauf jedes der wenigstens zwei Maschinenelemente durch die Steuerung verfolgt wird, und daß durch das Startsignal (25) der Start des wenigstens einen der wenigstens zwei Maschinenelemente aus der Ausgangsstellung heraus um eine Zeitdauer (Prozeßdauer T1) von variabel programmierbarer Länge verzögert gesteuert wird, und/oder daß der Beginn einer Bewegung eines abhängigen der wenigstens zwei Maschinenelemente in Abhängigkeit entweder von dem Erreichen einer bestimmten Position innerhalb des vorprogrammierten Bewegungsablaufs oder von dem Erreichen einer Endlage eines führenden der wenigstens zwei Maschinenelemente gesteuert wird.

2. Verfahren nach Anspruch 1, dadurch gekennzeichnet, daß der Beginn einer Bewegung des abhängigen Maschinenelements um eine Zeitdauer (Prozeßdauern T2, T4, T5, T7, T8) von variabel programmierbarer Länge verzögert gesteuert wird.

3. Verfahren nach Anspruch 1 oder 2, dadurch gekennzeichnet, daß bei einer vorprogrammierten Position eines der wenigstens zwei Maschinenelemente eine Prozeßdauer (z. B. Kühldauer, Aufschaltung von Vakuum auf Formen, Schmieren von Formen) von variabel programmierbarer Länge gestartet und/oder beendet wird.

4. Verfahren nach einem der Ansprüche 1 bis 3, dadurch gekennzeichnet, daß an wenigstens einer vorprogrammierten Position (29) oder Zeitmarke (30) innerhalb jeder Fertigungsprogrammdauer (36, 36') überprüft wird, ob ein bestimmtes Maschinenelement eine bestimmte Position oder Endlage erreicht hat oder nicht, daß der Beginn der Bewegung des abhängigen Maschinenelements nur bei positivem Ergebnis der Überprüfung gesteuert wird, und daß bei negativem Ergebnis der Überprüfung die Maschine selbsttätig stillgesetzt wird.

5. Verfahren nach einem der Ansprüche 1 bis 4, dadurch gekennzeichnet, daß von der Steuerung bei Eingabe einer Änderung der Größe einer Prozeßdauer (T1 bis T8) überprüft wird, ob die neue Größe der Prozeßdauer (T1 bis T8) mit dem bestehenden Fertigungsprogrammabstand (T) kompatibel ist, und daß, wenn Kompatibilität nicht gegeben ist, die Eingabe von der Steuerung zurückgewiesen wird.

6. Verfahren nach einem der Ansprüche 1 bis 5, dadurch gekennzeichnet, daß als Elektromotoren Schrittmotoren verwendet werden, daß der Bewegungsablauf des betreffenden Maschinenelements dadurch verfolgt wird, daß bei Erreichen des zu einer bestimmten Position oder Endlage des Maschinenelements gehörenden Zählwerts der von der Steuerung in zeitlich vorprogrammierter Folge ausgegebenen Schritte durch die Steuerung kontrolliert wird, ob die dem Zählwert entsprechende Schrittanzahl von dem Maschinenelement vollzogen wurde und ob durch das Maschinenelement ein der Position oder Endlage entsprechendes Signal mit einem Positions- oder Endlagensensor oder mit einem Winkeldecoder zu der Steuerung rückgeführt wurde, und daß bei negativem Ausgang der Kontrolle eine Meldung und gegebenenfalls die Stillsetzung der Maschine erfolgen.

7. Verfahren nach einem der Ansprüche 1 bis 5, dadurch gekennzeichnet, daß Elektromotoren mit Vierquadrantenregler verwendet werden und die Wegverfolgung des Bewegungsablaufs mit einem Rückführgebersystem (z. B. einem Winkeldecoder) erfolgt.

8. Verfahren nach einem der Ansprüche 1 bis 7, dadurch gekennzeichnet, daß der zeitliche Abstand zwischen aufeinanderfolgenden Startsignalen (25) (Fertigungsprogrammabstand T) nach Festlegung der optimalen und dann konstant gehalten Fertigungsprogrammdauer (36, 36') für den jeweiligen Prozeß minimiert wird.

9. Verfahren nach Anspruch 8, dadurch gekennzeichnet, daß bei einer nach dem Preß-Blas-Verfahren arbeitenden I.S.-Glasformmaschine für jede Sektion als Maschine im Sinne der vorangegangenen Ansprüche der minimale Fertigungsprogrammabstand (T min) von einer vorprogrammierten Position (31) während der Schwenkbewegung des Schwenkmechanismus aus seiner Ausgangsstellung (9) auf der Vorformseite zur Fertigformseite (8) bis zu einer vorprogrammierten Position (32) während der Bewegung des Entnahmemechanismus aus seiner Greifstellung (16) in seine Abgabestellung (18) definiert ist.

10. Verfahren nach einem der Ansprüche 1 bis 9, dadurch gekennzeichnet, daß dem Elektromotor ein Drehmoment- oder Linearverstärker nachgeschaltet wird.

11. Verfahren nach Anspruch 10, dadurch gekennzeichnet, daß ein hydraulischer Drehmoment- oder Linearverstärker verwendet wird.

**Claims**

1. Method for controlling a machine for processing molten glass or other thermoplastic materials, which includes a plurality of machine elements to be moved within a production programme duration (36, 36'), in which at least two machine elements are driven by an electric motor, wherein each production programme duration (36, 36') is started by an external starting signal (25) and wherein the start of at least one of the at least two machine elements from an initial position is initiated by the starting signal (25), characterised in that the courses of movement and, if required, the standstill durations (process durations T3, T6) of the at least two machine elements are variably programmed in an absolute time spacing in the memory of an electronic control unit, that the course of movement of each of the at least two machine elements is monitored by the control unit, and that the start of at least one of the at least two machine elements from the initial position is controlled by the start signal (25) delayed by a time duration (process duration T1) of variably programmable length, and/or that the beginning of a movement of a dependent one of the at least two machine elements is controlled in dependence either upon the attainment of a predetermined position within the preprogrammed course of movement or upon the attainment of an end position of a leading one of the at least two machine elements.

2. Method according to claim 1, characterised in that the beginning of a movement of the dependent machine element is controlled delayed by a time duration (process durations T2, T4, T5, T7, T8) of variably programmable length.

3. Method according to claim 1 or 2, characterised in that, in a preprogrammed position of one of the at least two machine elements, a process duration (e. g. a cooling duration, application of vacuum to moulds, lubrication of moulds) of variably programmable length is started and/or ended.

4. Method according to any of claims 1 to 3, characterised in that at at least one preprogrammed position (29) or time mark (30) within each production programme duration (36, 36') examination is made as to whether a predetermined machine element has or has not attained a predetermined position or end position, that the beginning of the movement of the dependent machine element is controlled only with a positive result from the examination and that, with a negative result from the examination, the machine is automatically stopped.

5. Method according to any of claims 1 to 4, characterised in that, upon the entry of a variation in the magnitude of a process duration (T1 to T8), the control unit examines whether the new magnitude of the process duration (T1 to T8) is compatible with the existing production programme spacing (T), and that, if compatibility is not given, the entry is rejected by the control unit.

6. Method according to any of claims 1 to 5, characterised in that stepping motors are used as the electric motors, that the course of movement of the respective machine element is so monitored that, on attaining the count of steps issued by the control unit in a sequence preprogrammed in time and associated with a predetermined position or end position of the machine element, the control unit checks whether the number of steps corresponding to the count have been completed by the machine element and whether a signal caused by the machine element and corresponding to the position or end position was fed back to the control unit by a position or end position sensor or by an angle decoder, and that, upon a negative result from the checking, an indication and, if required, stoppage of the machine follow.

7. Method according to any of claims 1 to 5, characterised in that electric motors with four-quadrant regulators are used and traversal of the course of movement is monitored by means of a feed-back transmitter system (e. g. an angle decoder).

8. Method according to any of claims 1 to 7, characterised in that the time spacing between successive start signals (25) (production programme spacing T) is minimised for the respective process after determining and then maintaining constant the optimum production programme duration (36, 36').

9. Method according to claim 8, characterised in that, with an IS glass-forming machine operating according to the press and blow method, for each section as the machine in accordance with the preceding claims, the minimum production programme spacing (T min) is defined from a preprogrammed position (31) during the pivotal movement of the pivoting mechanism from its starting position (9) on the parison mould side to the finishing mould side (8) until a preprogrammed position (32) during movement of the discharge mechanism from its gripping position (16) into its discharge position (18).

10. Method according to any of claims 1 to 9, characterised in that a torque or linear amplifier is connected with the output of the electric motor.

11. Method according to claim 10, characterised in that a hydraulic torque or linear amplifier is used.

## Revendications

1. Procédé de commande d'une machine pour le traitement de verre à l'état fondu ou d'autres matières thermoplastiques, qui présente plusieurs éléments de machine devant se mouvoir entre les limites d'une durée de programme de fabrication (36, 36'), où au moins deux éléments de machine sont entraînés par un moteur électrique, où chaque durée de programme de fabrication (36, 36') démarre sous l'action d'un signal de démarrage (25) externe, et où le signal de démarrage (25) déclenche le démarrage d'au moins l'un des deux éléments de machine à partir d'une position de départ, caractérisé en ce que les déroulements des mouvements et éventuellement les durées des temps morts (durées de procédé T3, T6) des au moins deux éléments de machine sont programmés d'une manière variable selon les tranches de temps absolues dans la zone de mémoire d'un dispositif de commande électronique, que le déroulement du mouvement de chacun des au moins deux éléments de machine est poursuivi par le système de commande, et que le démarrage au moins de l'un des au moins deux éléments de machine à partir de la position de départ est commandé par le signal de démarrage (25) d'une manière retardée d'une durée (durée de procédé T1) dont la longueur peut être programmée d'une manière variable, et/ou que le début d'un mouvement d'un dépendant des au moins deux éléments de machine est commandé, en fonction soit de l'arrivée sur une certaine position au cours du déroulement préprogrammé du mouvement, soit de l'arrivée à une position en bout d'un des au moins deux éléments de machine jouant le rôle d'élément maître.

2. Procédé selon la revendication 1, caractérisé en ce que le début du mouvement de l'élément de machine dépendant est commandé avec un retard correspondant à une durée (durées de procédé T2, T4, T5, T7, T8) dont la longueur peut être programmée d'une manière variable.

3. Procédé selon les revendications 1 ou 2, caractérisé en ce qu'une durée de procédé (par exemple durée de refroidissement, commutation de l'application du vide à moules, lubrification de moules) de longueur programmable et variable, est commencée et/ou terminée sur une position préprogrammée de l'un des au moins deux éléments de machine.

4. Procédé selon l'une des revendications 1 à 3, caractérisé en ce que, sur au moins une position préprogrammée (29) ou un instant (30) au cours de chaque durée de programme de fabrication (36, 36'), on vérifie si un certain élément de machine a atteint, ou non, une certaine position ou une position finale, que le début du mouvement de l'élément de machine dépendant n'est commandé que si cette vérification présente un résultat positif, et que, dans le cas d'un résultat négatif de la vérification, la machine est arrêtée automatiquement.

5. Procédé selon l'une des revendications 1 à 4, caractérisé en ce que, lors de l'introduction d'une modification de la valeur d'une durée de procédé (T1 à T8), le système de commande vérifie si la nouvelle valeur de la durée de procédé (T1 à T8) est compatible avec l'écart (T) existant entre programmes de fabrication, et que, quand il n'y a pas compatibilité, l'introduction est refusée par le système de commande.

6. Procédé selon l'une des revendications 1 à 5, caractérisé en ce qu'on utilise en tant que moteurs électriques des moteurs pas à pas, que le déroulement du mouvement de l'élément de machine concerné est poursuivi par le fait que, quand la valeur de comptage, correspondant à une position donnée ou à une position finale de l'élément de machine, des pas émis par le système de commande selon une séquence temporelle préprogrammée est atteinte, le système de commande vérifie si le nombre de pas correspondant à la valeur de comptage a été effectué par l'élément de machine, et si l'élément de machine a envoyé en rétroaction au système de commande un signal correspondant à la position ou à la position finale, à l'aide d'un capteur de position ou de position finale, ou à l'aide d'un décodeur angulaire, et qu'un résultat négatif de la vérification conduit à une signalisation et éventuellement à l'arrêt de la machine.

7. Procédé selon l'une des revendications 1 à 5, caractérisé en ce que l'on utilise des moteurs électriques à régulateur à quatre quadrants, et que la poursuite du mouvement s'effectue avec un système émetteur de rétroaction (par exemple à l'aide d'un décodeur angulaire).

8. Procédé selon l'une des revendications 1 à 7, caractérisé en ce que l'écart temporel entre des signaux de démarrage (25) successifs (écart (T) entre programmes de fabrication) est minimisé après fixation de la durée de programme de fabrication (36, 36') pour le procédé respectif, optimale puis maintenue constante.

9. Procédé selon la revendication 8, caractérisé en ce que, dans une machine sectionnelle de moulage de verre travaillant selon le procédé pressé-soufflé, pour chaque section, étant considérée comme une machine au sens des revendications précédentes, l'écart minimal (T min) entre programmes de fabrication, est défini entre d'une part une position préprogrammée (31) pendant le mouvement de renversement du mécanisme de renversement de sa position de départ (9) sur le côté moule ébaucheur à sa position sur le côté moule finisseur (8), et d'autre part une position préprogrammée (32) pendant le mouvement du mécanisme de démoulage, de sa position d'extraction (16) à une position de livraison (18).

10. Procédé selon l'une des revendications 1 à 9, caractérisé en ce que le moteur électrique est suivi d'un amplificateur de couple ou d'un amplificateur linéaire.

11. Procédé selon la revendication 10, caractérisé en ce qu'on utilise un amplificateur de couple ou un amplificateur linéaire hydraulique.

**Fig.1**

Fig.2